# FASCICULE DE BREVET EUROPEEN

(11) **EP 0 854 624 B1**
(45) Date de publication et mention de la délivrance du brevet: **15.12.2004**
(21) Numéro de dépôt: 98200087.9
(22) Date de dépôt: 14.01.1998
(51) Int. Cl.: H04M 1/72, G06F 7/58

(54) **Méthode de génération d'un nombre aléatoire à partir d'un signal radio**
Verfahren zur Erzeugung einer Zufallszahl unter Verwendung eines Funksignals
Method for generating a random number using a radio signal

(30) Priorité: 21.01.1997 FR 9700580
(43) Date de publication de la demande: 22.07.1998
(73) Titulaire: Koninklijke Philips Electronics N.V., 5621 BA Eindhoven (NL)
(72) Inventeur: Sandré, Benoît, 75008 Paris (FR); Fernandez, Gabriel, 75008 Paris (FR)
(74) Mandataire: Chaffraix, Jean

(56) Documents cités:
- DE-A- 4 213 988
- FR-A- 2 541 539

## Description

L'invention concerne une méthode de génération d'un nombre aléatoire basée sur la réception d'un signal radio, ainsi qu'un dispositif de génération d'un nombre aléatoire à partir d'un signal radio délivré par un récepteur radio.

L'invention concerne également un équipement téléphonique, notamment un téléphone sans fil, comportant un dispositif de génération d'un nombre aléatoire à partir d'un signal radio délivré par un récepteur radio.

La demande de brevet allemand DE 42 13 988 A1 déposée le 29 avril 1992 décrit une méthode de génération d'un nombre aléatoire à partir de l'amplitude d'un bruit radio ambiant. L'amplitude du signal reçu est fournie à un convertisseur analogique-numérique puis à un comparateur qui délivre une valeur binaire. Plusieurs valeurs binaires ainsi obtenues sont ensuite ordonnées pour former un nombre aléatoire.

Cette méthode est relativement coûteuse et complexe à mettre en oeuvre du fait de l'utilisation d'un convertisseur analogique-numérique.

L'invention a notamment pour but de proposer une solution qui ne présente pas ces inconvénients.

Pour cela, une méthode de génération d'un nombre aléatoire selon l'invention et telle que décrite dans le paragraphe introductif est caractérisée en ce qu'elle consiste:
- à donner au moins une mesure d'au moins un intervalle de temps séparant des passages dudit signal par un niveau de référence,
- et à former ledit nombre aléatoire à partir d'au moins une partie d'une ou plusieurs desdites mesures.

De même, un dispositif de génération d'un nombre aléatoire selon l'invention est caractérisé en ce qu'il comporte:
- des premiers moyens pour donner au moins une mesure d'au moins un intervalle de temps séparant des passages dudit signal par un niveau de référence,
- et des seconds moyens pour former ledit nombre aléatoire à partir d'au moins une partie d'une ou plusieurs desdites mesures.

Conformément à l'invention, il suffit donc par exemple d'utiliser un comparateur pour fournir un signal en créneaux représentatif des passages dudit signal radio par ledit niveau de référence, et une horloge qui délivre une mesure de l'intervalle de temps séparant deux fronts dudit signal radio.

En particulier, lorsque la méthode selon l'invention est appliquée dans un équipement téléphonique doté d'un récepteur radio et d'un processeur, il suffit d'utiliser un registre d'horloge dudit processeur pour mesurer des intervalles de temps séparant deux commutations d'un port dudit processeur sur lequel on porte le signal délivré par ledit comparateur.

Dans un mode de réalisation particulièrement avantageux, notamment lorsque la méthode selon l'invention est appliquée à un téléphone sans fil, un nombre aléatoire de n éléments binaires est formé à partir de p éléments binaires prélevés dans n/p mesures d'intervalles de temps, et lesdits p éléments binaires sont les p éléments binaires de poids faible desdites n/p mesures.

En effet, l'environnement radio dans lequel se trouve l'équipement n'étant pas prévisible, le signal radio utilisé peut être considéré comme aléatoire. Mais, lorsque le signal utile est un signal de parole, le récepteur radio a une bande passante comprise entre 300Hz et 3000Hz. Les intervalles de temps mesurés sont donc compris entre 0.15ms et 1.5ms, ce qui signifie qu'ils ne sont pas totalement aléatoires. Ce mode de réalisation permet d'améliorer le caractère aléatoire du nombre obtenu en effectuant plusieurs mesures et en ne retenant que la partie la moins significative de chacune de ces mesures.

L'invention sera mieux comprise et d'autres détails apparaîtront à la lumière de la description qui va suivre en regard des dessins annexés qui sont donnés à titre d'exemples non limitatifs et dans lesquels:
- la figure 1 représente un téléphone sans fil selon l'invention,
- la figure 2 représente un exemple de signaux utilisés pour la mise en oeuvre de l'invention,
- la figure 3 représente un organigramme regroupant les différentes étapes d'une méthode de génération d'un nombre aléatoire selon l'invention.

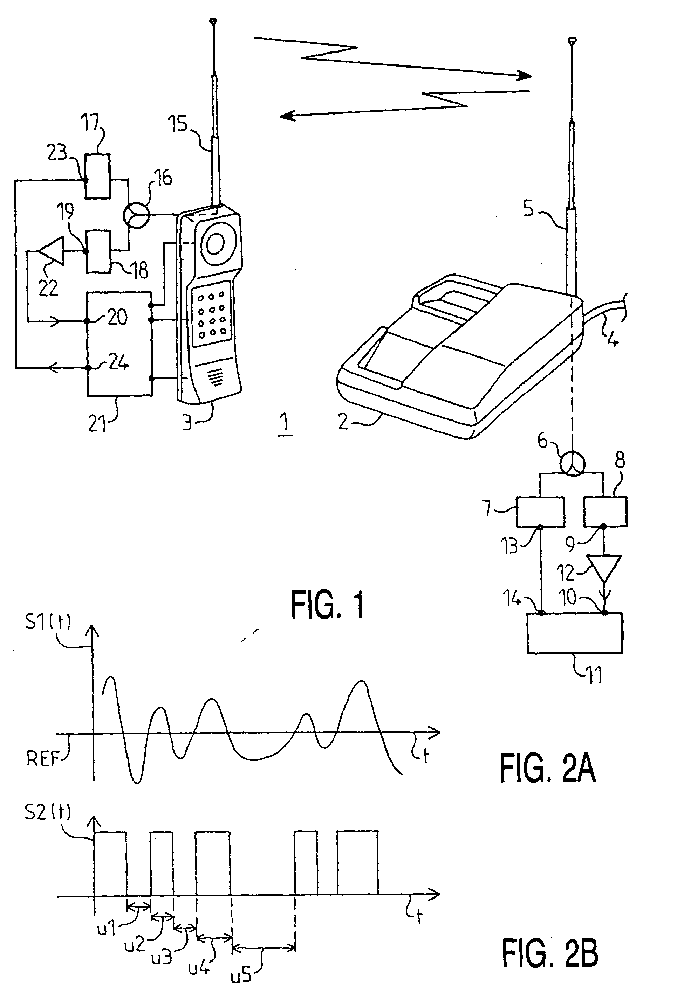

L'invention concerne une méthode de génération d'un nombre aléatoire à partir d'un signal radio délivré en sortie d'un récepteur radio. Elle s'applique donc de façon particulièrement avantageuse à tout équipement doté d'un récepteur radio, et notamment à un équipement téléphonique sans fil tel que représenté sur la figure 1, par exemple pour générer un code d'identification.

En effet, dans un téléphone mobile constitué d'une unité de base et d'une unité mobile qui communiquent entre elles par un lien radio, un mécanisme d'identification mutuelle de la base et du mobile est mis en oeuvre préalablement à l'établissement de toute communication radio afin d'éviter tout piratage de la ligne téléphonique. Ce mécanisme consiste à échanger un code d'identification connu de la base et du mobile seulement, et qui a préalablement été choisi aléatoirement. Il est connu de la demande de brevet français n° 2559008 de générer ce code d'identification de façon aléatoire dans l'unité de base, et d'utiliser des moyens d'appariement de l'unité mobile avec l'unité de base pour transmettre à l'unité mobile le code d'identification qui a été généré.

D'après la figure 1, un équipement téléphonique sans fil 1 selon l'invention comporte une unité de base 2 et une unité mobile 3. L'unité de base 2 est reliée à une prise téléphonique murale par un câble 4, et elle est dotée d'une antenne 5. L'antenne 5 est reliée par l'intermédiaire d'un duplexeur d'émission/réception 6 à un émetteur 7 et à un récepteur 8. Une sortie 9 du récepteur 8 est reliée à une entrée 10 d'un microprocesseur 11 par l'intermédiaire d'un comparateur 12. Et une entrée 13 de l'émetteur 7 est reliée à une sortie 14 du microprocesseur 11.

De même, l'unité mobile 3 est dotée d'une antenne 15 qui est reliée par l'intermédiaire d'un duplexeur d'émission/réception 16 à un émetteur 17 et à un récepteur 18. Une sortie 19 du récepteur 18 est reliée à une entrée 20 d'un microprocesseur 21 par l'intermédiaire d'un comparateur 22. Et une entrée 23 de l'émetteur 17 est reliée à une sortie 24 du microprocesseur 21.

Sur la figure 2a on a représenté à titre d'exemple un signal S1 délivré par l'un des récepteurs radio 8 ou 18. Ce signal S1 est fourni à l'un des comparateurs 12 ou 22 afin d'être comparé à un niveau de référence REF. Le signal S2 disponible en sortie dudit comparateur est représenté sur la figure 2b. Il s'agit d'un signal logique dont les fronts correspondent au passage du signal S1 par le niveau de référence REF. Ce signal S2 est porté sur l'une des entrées 10 ou 20 des microprocesseur 11 ou 21.

La méthode selon l'invention consiste à mesurer à l'aide d'un registre d'horloge du microprocesseur 11 ou 21 des intervalles de temps entre deux commutations du port 10 ou 20, c'est-à-dire entre deux passages du signal S1 par le niveau de référence REF.

L'environnement radio dans lequel se trouve l'équipement n'est, par nature, pas prévisible; toutefois, comme cela a déjà été expliqué, le temps entre deux basculements dépend de la bande passante du récepteur. Pour améliorer la qualité du nombre aléatoire obtenu, on fait donc plusieurs mesures précises desdits intervalles de temps, et l'on ne conserve que la partie la moins significative des résultats obtenus. A titre d'exemple, pour obtenir un nombre aléatoire de 20 éléments binaires, on effectue 5 mesures d'intervalles de temps u1, u2, u3, u4 et u5, et l'on utilise les 4 éléments binaires de poids les plus faibles de chacune de ces 5 mesures.

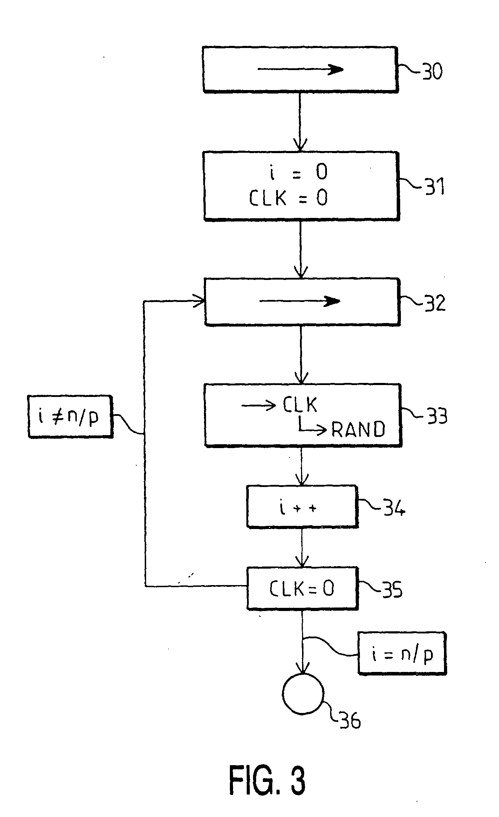

Sur la figure 3, on a représenté sous forme d'organigramme les différentes étapes d'une méthode de génération d'un nombre aléatoire selon l'invention.

A la case 30, le microprocesseur 11 ou 21 est en attente d'une commutation sur son port 10 ou 20 respectivement. Dès qu'une telle commutation se produit le fonctionnement se poursuit à la case 31. A la case 31 une variable i et un registre d'horloge CLK du microprocesseur sont initialisés à zéro. Puis à la case 32, le microprocesseur se met à nouveau en attente d'une commutation sur son port 10 ou 20. Lorsque cette commutation se produit, le fonctionnement se poursuit à la case 33. A la case 33, le contenu du registre d'horloge CLK est lu, et les p éléments binaires de poids faible sont stockés dans p emplacements d'une variable RAND. Puis à la case 34, le compteur i est incrémenté d'une unité. Et, à la case 35 le registre d'horloge CLK est réinitialisé. Tant que la valeur du compteur i est différente de n/p le fonctionnement reprend à la case 32. Lorsque i=n/p , il se termine à la case 36.

## Revendications

1. Méthode de génération d'un nombre aléatoire (RAND) basée sur la réception d'un signal radio (S1), **caractérisée en ce qu'**elle consiste:
- à donner au moins une mesure (u1, u2, u3, u4, u5) d'au moins un intervalle de temps séparant des passages dudit signal par un niveau de référence (REF),
- et à former ledit nombre aléatoire à partir d'au moins une partie d'une ou plusieurs desdites mesures.

2. Méthode de génération d'un nombre aléatoire de n éléments binaires selon la revendication 1, **caractérisée en ce que** ledit nombre aléatoire est formé à partir de p éléments binaires prélevés dans n/p mesures d'intervalles de temps.

3. Méthode de génération d'un nombre aléatoire selon la revendication 2, **caractérisé en ce que** lesdits p éléments binaires sont les p éléments binaires de poids faible desdites n/p mesures.

4. Dispositif de génération d'un nombre aléatoire (RAND) à partir d'un signal radio (S1) délivré par un récepteur radio (8 ; 18), **caractérisé en ce qu'**il comporte:
- des premiers moyens (12, 10; 22, 20) pour donner au moins une mesure (u1, u2, u3, u4, u5) d'au moins un intervalle de temps séparant des passages dudit signal par un niveau de référence (REF),
- et des seconds moyens (11 ; 21) pour former ledit nombre aléatoire à partir d'au moins une partie d'une ou plusieurs desdites mesures.

5. Dispositif de génération d'un nombre aléatoire de n éléments binaires selon la revendication 4, **caractérisée en ce que** ledit nombre aléatoire est formé à partir de p éléments binaires prélevés dans n/p mesures d'intervalles de temps.

6. Dispositif de génération d'un nombre aléatoire selon la revendication 5, **caractérisé en ce que** lesdits p éléments binaires sont les p éléments binaires de poids faible desdites n/p mesures.

7. Equipement téléphonique (3 ; 2) comportant un dispositif de génération d'un nombre aléatoire selon l'une des revendications 4 à 6.

8. Téléphone sans fil (1) comportant au moins une unité de base (2) et une unité mobile (3) dotées de moyens d'appariement pour s'échanger un code commun d'identification, **caractérisé en ce que** l'une au moins desdites unités comporte un dispositif de génération d'un nombre aléatoire selon l'une des revendications 4 à 6.

## Patentansprüche

1. Verfahren zur Erzeugung einer Zufallszahl (RAND) gründend auf dem Empfang eines Funksignals (S1), **dadurch gekennzeichnet, dass** es besteht aus:
- Mindestens eine Messung (u1, u2, u3, u4, u5) von mindestens einem Zeitintervall zur Trennung der Durchgänge des besagten Signals durch ein Referenzniveau (REF) vorzugeben, und
- die besagte Zufallszahl unter Verwendung von mindestens einem oder mehrerer der Teile der besagten Messungen zu bilden.

2. Verfahren zur Erzeugung einer Zufallszahl von n binären Elementen nach Anspruch 1, **dadurch gekennzeichnet, dass** die besagte Zufallszahl aus p binären Elementen gebildet wird, die aus n/p Messungen von Zeitintervallen entnommen werden.

3. Verfahren zur Erzeugung einer Zufallszahl nach Anspruch 2, **dadurch gekennzeichnet, dass** die besagten p binären Elemente die p binären Elemente geringen Stellenwerts der besagten n/p Messungen sind.

4. Einrichtung zur Erzeugung einer Zufallszahl (RAND) unter Verwendung eines von einem Funkempfänger (8; 18) ausgegebenen Funksignals (Si), **dadurch gekennzeichnet, dass** sie enthält:
- Erste Mittel (12, 10; 22, 20), um mindestens eine Messung (u1, u2, u3, u4, u5) von mindestens einem Zeitintervall zur Trennung der Durchgänge des Signals durch ein Referenzniveau (REF) vorzugeben, und
- zweite Mittel (11; 21), um die besagte Zufallszahl unter Verwendung von mindestens einem oder mehrerer der Teile der besagten Messungen zu bilden.

5. Einrichtung zur Erzeugung einer Zufallszahl von n binären Elementen nach Anspruch 4, **dadurch gekennzeichnet, dass** die besagte Zufallszahl aus p binären Elementen gebildet wird, die aus n/p Messungen von Zeitintervallen entnommen werden.

6. Einrichtung zur Erzeugung einer Zufallszahl nach Anspruch 5, **dadurch gekennzeichnet, dass** die besagten p binären Elemente die p binären Elemente geringen Stellenwerts der besagten n/p Messungen sind.

7. Telefonausrüstung (3; 2) mit einer Einrichtung zur Erzeugung einer Zufallszahl nach einem der Ansprüche 4 bis 6.

8. Schnurloses Telefon (1) mit mindestens einer Basiseinheit (2) und einer mobilen Einheit (3), die mit Paarungsmitteln ausgestattet sind, um einen gemeinsamen Identifizierungskode auszutauschen, **dadurch gekennzeichnet, dass** mindestens eine der besagten Einheiten eine Einrichtung zur Erzeugung einer Zufallszahl nach einem der Ansprüche 4 bis 6 enthält.

## Claims

1. A method of generating a random number (RAND) based on the reception of a radio signal (S1), **characterized in that** it consists of:
- performing at least one measurement (u1, u2, u3, u4, u5) of at least one time interval separating passages of said signal through a reference level (REF), and
- forming said random number from at least a part of one or more of said measurements.

2. A method of generating a random number of n binary elements as claimed in claim 1, **characterized in that** said random number is formed from p binary elements taken in n/p time interval measurements.

3. A method of generating a random number as claimed in claim 2, **characterized in that** said p binary elements are the p least significant binary elements of said n/p measurements.

4. A device for generating a random number (RAND) from a radio signal (S1) supplied by a radio receiver (8; 18), **characterized in that** the device comprises:
- first means (12, 10; 22, 20) for performing at least one measurement (u1, u2, u3, u4, u5) of at least one time interval separating passages of said signal through a reference level (REF), and
- second means (11; 21) for forming said random number from at least a part of one or more of said measurements.

5. A device for generating a random number of n binary elements as claimed in claim 4, **characterized in that** said random number is formed from p binary elements taken in n/p time interval measurements.

6. A device for generating a random number as claimed in claim 5, **characterized in that** said p binary elements are the p least significant binary elements of said n/p measurements.

7. Telephone equipment (3; 2) comprising a device for generating a random number as claimed in any one of claims 4 to 6.

8. A cordless telephone (1) comprising at least a base station (2) and a handset (3) provided with matching means for exchanging a common code of identification,
**characterized in that** at least one of said units comprises a device for generating a random number as claimed in any one of claims 4 to 6.
